# EUROPEAN PATENT APPLICATION

(11) **EP 2 381 305 A1**
(43) Date of publication of application: **26.10.2011**
(21) Application number: 09832851.1
(22) Date of filing: 12.05.2009
(51) Int. Cl.: G03B 35/10, H04N 13/00

(54) **SINGLE-SENSOR JUXTAPOSING TYPE STEREO-PICTURE SHOOTING METHOD**

(30) Priority: 18.12.2008 CN 200810185899
(71) Applicant: Inlife-handnet Co., Ltd., Nanshan District Shenzhen City Guangdong 518000 (CN)
(72) Inventor: LI, Wei, Guangdong 518000 (CN); XIA, Denghai, Guangdong 518000 (CN)
(74) Representative: Acco, Stefania
(86) International application number: PCT/CN2009/071754
(87) International publication number: WO 2010/069169

(57) **Abstract**

A single-sensor juxtaposing-type stereoscopic-image shooting method involves processing and storing image signals. Light from a subject is focalized via two batteries of optical imaging lenses (2) with an interaxial distance of 57 - 65 mm, producing left and right optical signals. The groups of optical signals are reflected by the first reflection mirror (3) and the second reflection mirror (4), respectively. Each of the signals is rotated 90 degrees by a light path direction conversion component (5). Two groups of optical-signal images are produced in a CCD/CMOS sensor (1) that is set to a 4:3 width-to-height ratio with a rotation setting of 90 degrees. Image signals from the sensor are processed and stored.

## Description

### FIELD OF THE INVENTION

The present invention relates to stereo-picture shooting, and more specifically relates to a single-sensor juxtaposing type stereoscopic-image shooting method and a stereoscopic-image shooting apparatus for implementing above method.

### BACKGROUND OF THE INVENTION

Eyes can produce stereo feelings to the seen objects based on the visual differences between left and right eye. Thus, common stereo photographic apparatus all use dual camera lens to make image of the object and then deal with the images. However, it may bring outstanding issues mainly as follows. 1, the dual lens have inconsistent focusing performances which results in different definitions of left and right video, and finally results in blur images. 2, the installation of dual lens cannot guarantee the consistent counterpoint of the images such that the consistency of the level and tilt of the image can not be guaranteed in visual angle, then there may be deviation when the two images are three-dimensionally superposed and as a result, there will be fuzzy ghost on the image. 3, the inconsistency of dual image sensors may lead to the inconsistencies of the characteristics of the image such as brightness, contrast, chroma and grayscale, and there may be evident visual difference between the left and right images, which may produce visual dizziness, blurred images and so on when the images are three-dimensionally superposed. However, a precise optical imaging structure is used in the present invention to ensure the consistency along the optical path, as well as a single image sensor to receive the images in two paths to ensure the complete consistency in the electronic performances of the images.

### SUMMARY OF THE INVENTION

The objective of the present invention is to provide a single-sensor juxtaposing-type stereoscopic-image shooting method with good consistency of images, aiming at the technical problems of the prior art.

The other objective of the present invention is to provide a stereoscopic-image shooting apparatus for implementing above method, aiming at the technical problems of the prior art.

According to an aspect, a single-sensor juxtaposing-type stereoscopic-image shooting method is provided, which comprising following steps: (1) focalizing light from a subject to be shot via two batteries of optical imaging lenses with an interaxial distance of 57 - 65 mm; (2) reflecting two groups of optical signals with visual difference produced by said focalizing through a first reflection mirror and a second reflection mirror respectively; (3) rotating the left and right groups of optical signals 90 degrees in a same direction by a light path direction conversion component; (4) producing images in a single CCD/CMOS sensor that is set to a 4:3 width-to-height ratio with a rotation setting of 90 degrees from the two groups of optical signals; (5) processing and storing image signals from the single CCD/CMOS sensor.

Advantageously, the light path direction conversion component is a group of prisms.

Advantageously, in the step (4), said producing images in a single CCD/CMOS sensor that is set to a 4:3 width-to-height ratio with a rotation setting of 90 degrees from the two groups of optical signals is to produce images at two symmetrical sides with respect to a central axis in the single CCD/CMOS sensor respectively from two groups of optical signals, so as to form two juxtaposed images; wherein, vacancy occupied approximately 5% of the width of the image is remained in the direction of the width of a single image.

According to the present invention, to achieve the objective better, a single-sensor juxtaposing-type stereoscopic-image shooting apparatus is provided, which comprising a single CCD/CMOS sensor coupled to an image processor, wherein, the sensor is set to a common 4:3 width-to-height ratio with a rotating setting of 90 degrees corresponding to the normal mounting position; two batteries of optical imaging lenses with an interaxial distance of 57 - 65 mm are located in front of the sensor; a first reflection mirror, a second reflection mirror and a light path direction conversion component are set inside each of the two batteries of optical imaging lenses, wherein two groups of optical signals with visual difference that passed the batteries of optical imaging lenses, the first reflection mirror, the second reflection mirror and the light path direction conversion component respectively are projected onto the left and right sides of the sensor to produce images.

Advantageously, the light path direction conversion component is a group of prisms.

The present invention has following advantages compared with the prior art:
(1) since images are produced simultaneously by dual optical paths, the immediate collection of left and right images without delay will guarantee the effects of the stereo imaging.
(2) a single CCD/CMOS image sensor is used to ensure the consistencies of image brightness, contrast, color and grayscale between left and right images, so as to solve the problem of poor consistencies of above technical indices in traditional dual sensors.
(3) with use of the image sensor with a common 4:3 width-to-height ratio, complete left and right images with a 16:9 width-to-height ratio can be easily processed latterly. Thus, it is beneficial to lower the development costs for the product and expand and apply of the stereoscopic-video product.

### BRIEF DESCRIPTION OF THE DRAWINGS

The present invention will be further illuminated combining the following embodiment and drawings without any limit to the present invention.
Figure 1 is a structure diagram of the apparatus of present invention;
Figure 2 is a diagram of the setting for the sensor of the present invention;
Figure 3 is a block diagram of the image processing circuit of the present invention.

In the drawings: sensor 1, battery of optical imaging lenses 2, first reflection mirror 3, second reflection mirror 4, light path direction conversion component 5, image processor 6.

### DETAILED DESCRIPTION OF THE PREFERRED EMBODIMENT

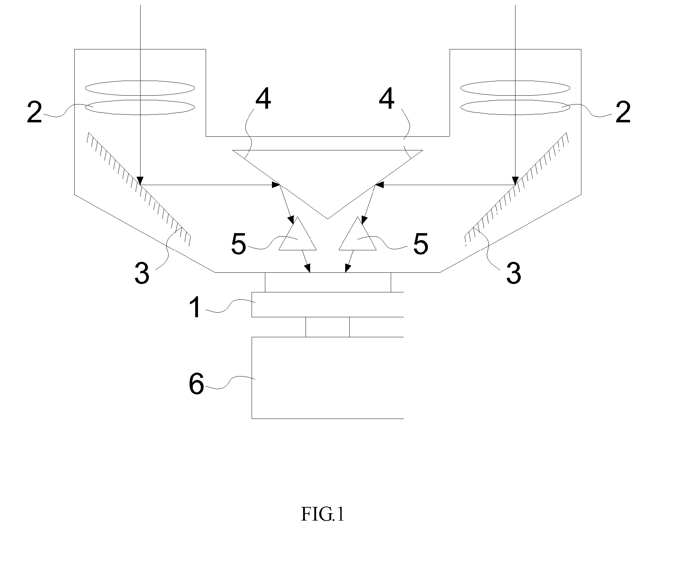

Referring to FIG.1, a detailed embodiment of a single-sensor juxtaposing type stereoscopic-image shooting apparatus of the present invention is shown. The apparatus comprises a CCD/CMOS sensor 1 coupled to an image processor 6. The sensor 1 is set to a common 4:3 width-to-height ratio with a rotating setting of 90 degrees corresponding to the normal mounting position. Two batteries of optical imaging lenses 2 with an interaxial distance of 57 - 65 mm are located in front of the sensor 1. A first reflection mirror 3, a second reflection mirror 4 and a light path direction conversion component 5 are set in the two batteries of optical imaging lenses 2. Two groups of optical signals with visual difference that passed the batteries of optical imaging lenses 2, the first reflection mirror 3, the second reflection mirror 4 and the light path direction conversion component 5 respectively are projected onto the left and right sides of the sensor 1 to produce images. A group of prisms may act as the light path direction conversion component 5, wherein the left and right groups of prisms may rotate the two groups of optical signals 90 degrees counterclockwise respectively.

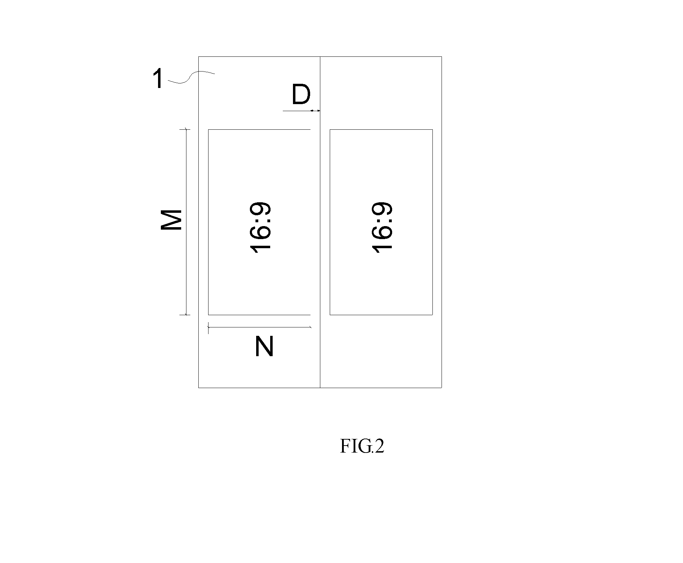

Refer to FIG.2, since the common standard format of 4:3 width-to-height ratio is used in the CCD or CMOS, the left and right light paths should project image superimposed upper and lower onto the sensor 1 directly when the stereo-image with a 16:9 width-to-height ratio is obtained through the sensor 1 with a 4:3 width-to-height ratio, so as to make full use of the pixel array of the sensor 1. But it is rather difficult with respect to the optical design and may lead to a complex structure, and is also difficult to implement. The structure is simplified in the present invention where the image sensor 1 is rotated 90 degrees counterclockwise while the image produced from each optical path is rotated 90 degrees counterclockwise through the prisms. In this way, the images produced from the left and right groups of optical signals fall at the left and right sides with respect to the centre of the dual optical path in a manner of being rotated 90 degrees. That is, the images are produced at two symmetrical sides corresponding to the central axis in the CCD/CMOS sensor 1 to form two juxtaposing (side-by-side) images. As shown in FIG.2, the image is chosen according to an M*N width-to-height ratio, so as to ensure that there is no crossing when the image is produced. Besides, a space D approximate to 5% of the width of the image remains in the both sides of the image in the width direction.

Referring to FIG.1, the stereoscopic-image shooting method of the present invention comprises following steps:
(1) Light from a subject to be shot is focalized via two batteries of optical imaging lenses with an interaxial distance of 57 - 65 mm, producing left and right groups of optical signals with visual difference.
(2) Two groups of optical signals with visual difference produced by said focalizing are reflected by a first reflection mirror and a second reflection mirror respectively.
(3) The left and right groups of optical signals pass through a light path direction conversion component (groups of prisms) that will rotate the optical signals 90 degrees counterclockwise respectively.
(4) Two groups of optical signals are projected onto a single CCD/CMOS sensor that is set to a 4:3 width-to-height ratio with an anticlockwise rotation setting of 90 degrees, then left and right groups of images are produced.
(5) Left and right groups of image signals from the single CCD/CMOS sensor are processed and stored subsequently.

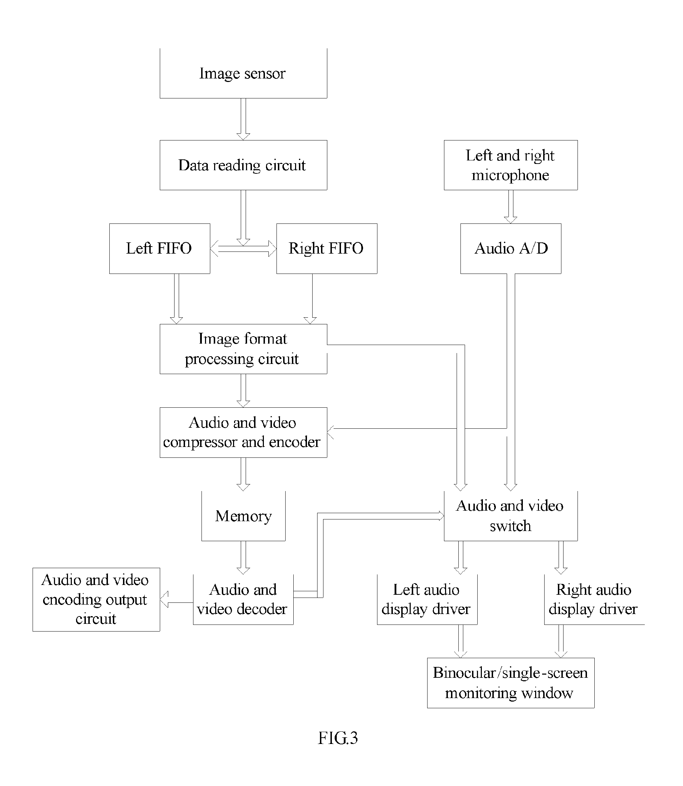

Referring to FIG.3, the image is read by a data reading circuit according to a certain frame frequency after the image has been produced in the present invention. The read image data comprises two images produced simultaneously. Then, left and right image data are separated by left FIFO and right FIFO. The separated images are two full-frame images obtained simultaneously. After entering an image format processing circuit, the image data can be produced into side-by-side image directly, as well as images formatted in frame-by-frame, field-by-field, line-by-line and dot-by-dot.

Upon being format translated on request, the image will enter an encoder, where the audio and video can be compressed and encoded simultaneously. The encoded data will then enter the memory and then be stored therein. If any stored image shall be watched, the data will be extracted out of the memory and decoded subsequently. Then, the decoded data will be forwarded to a corresponding encoder and driver to be outputted to an external display or be watched using the binocular/single stereo display integrated in the apparatus.

Referring to FIG.3, an audio and video switch may be additionally included in the apparatus of the present invention, the use of which are as follows. Side-by-side signal may be outputted from the image format processor after the images have been separated. The audio and video switch is operable to forward the side-by-side signal directly to the binocular/single stereo display within the apparatus for displaying when the image shooting apparatus is shooting and the shooting screen should be monitored, while audio is switched to real-time audio. In this way, the delay between the screen and actual scene is less when monitoring the screen, so as to facilitate timely monitoring and achieve the performance called as Cut-through When the recorded program is replayed, the audio and video switch may switch the signal to the output of the decoder. As a result, the recorded episode can be appreciated.

Complete images without delay between the left and right images will be obtained based on the present invention when performing stereoscopic-image shooting. Compared to other methods, the image presented in the present invention has advantages such as no delay between the left and right images, various format of screen video, and high uniformity of screen quality.

## Claims

1. A single-sensor juxtaposing-type stereoscopic-image shooting method, wherein, comprising following steps:
(1) focalizing light from a subject to be shot via two batteries of optical imaging lenses with an interaxial distance of 57 - 65 mm;
(2) reflecting two groups of optical signals with visual difference produced by said focalizing through a first reflection mirror and a second reflection mirror respectively;
(3) rotating the left and right groups of optical signals 90 degrees in a same direction by a light path direction conversion component;
(4) producing images in a single CCD/CMOS sensor that is set to a 4:3 width-to-height ratio with a rotation setting of 90 degrees from the two groups of optical signals;
(5) processing and storing image signals from the single CCD/CMOS sensor.

2. The single-sensor juxtaposing-type stereoscopic-image shooting method of claim 1, wherein the light path direction conversion component is a group of prisms.

3. The single-sensor juxtaposing-type stereoscopic-image shooting method of claim 1, wherein, in the step (4), said producing images in a single CCD/CMOS sensor that is set to a 4:3 width-to-height ratio with a rotation setting of 90 degrees from the two groups of optical signals is to produce images at two symmetrical sides with respect to a central axis in the single CCD/CMOS sensor respectively from two groups of optical signals, so as to form two juxtaposed images; wherein, vacancy occupied approximately 5% of the width of the image is remained in the direction of the width of a single image.

4. An apparatus for implementing the single-sensor juxtaposing-type stereoscopic-image shooting method of claim 1, comprising a single CCD/CMOS sensor (1) coupled to an image processor (6), wherein, the sensor (1) is set to a common 4:3 width-to-height ratio with a rotating setting of 90 degrees corresponding to the normal mounting position; two batteries of optical imaging lenses (2) with an interaxial distance of 57 - 65 mm are located in front of the sensor (1); a first reflection mirror (3), a second reflection mirror (4) and a light path direction conversion component (5) are set inside the two batteries of optical imaging lenses (2); wherein two groups of optical signals with visual difference that passed the batteries of optical imaging lenses (2), the first reflection mirror (3), the second reflection mirror (4) and the light path direction conversion component (5) respectively are projected onto the left and right sides of the sensor (1) to produce images.

5. The apparatus of claim 4, wherein the light path direction conversion component is a group of prisms.
